# EUROPÄISCHE PATENTSCHRIFT

(11) **EP 2 149 759 B1**
(45) Veröffentlichungstag und Bekanntmachung des Hinweises auf die Patenterteilung: **16.03.2016**
(21) Anmeldenummer: 09164738.8
(22) Anmeldetag: 07.07.2009
(51) Int. Cl.: F24D 3/14, F24D 19/00, F28D 1/03, F24D 19/02, F24D 13/04, E04B 2/74, F24D 19/06, F28F 9/00

(54) **Heizkörperanordnung**
Radiator assembly
Agencement de radiateur

(30) Priorität: 30.07.2008 DE 202008010425 U
(43) Veröffentlichungstag der Anmeldung: 03.02.2010
(73) Patentinhaber: Hansgrohe SE, 77761 Schiltach (DE)
(72) Erfinder: Urquiola, Patricia, 20133 Mailand (IT)
(74) Vertreter: Patentanwälte Ruff, Wilhelm, Beier, Dauster & Partner mbB

(56) Entgegenhaltungen:
- WO-A1-96/31148
- AT-A1- 507 017
- DE-A1- 2 422 472
- DE-A1- 19 834 450
- DE-U1- 20 004 824
- DE-U1- 29 516 210
- DE-U1-202006 001 339
- FR-A- 1 233 055
- FR-A1- 2 317 596
- GB-A- 2 199 744

## Beschreibung

Die Erfindung betrifft eine Heizkörperanordnung.

Bekannt sind sogenannte Platten-Heizkörper, die an einer Wand montiert sind in einem zu beheizenden Raum und eine glatte Oberfläche aufweisen. Diese glatte Oberfläche ist aus ästhetischen Gründen gewählt, abweichend von den üblicherweise gewellten Oberflächen für eine bessere Wärmeabgabe in den Raum. Solche Heizkörper sind allgemein an einer Raumwand befestigt mit geringem Abstand dazu, um möglichst wenig zu stören und um optisch nicht aufzufallen.

Die WO 96/31148 A1 offenbart eine weitere Heizkörperanordnung mit mehreren Sektionen bzw. flächigen Heizkörperelementen. Diese sind elektrisch beheizbar und weisen ein zirkulierendes Heizmedium auf, das von einer Heizung beheizt wird. Dabei ist entweder pro einzelnem Heizkörperelement ein eigener elektrischer Anschluss vorgesehen oder einer für mehrere Heizkörperelemente.

### Aufgabe und Lösung

Der Erfindung liegt die Aufgabe zu Grunde, eine Heizkörperanordnung zu schaffen, die gegenüber dem Stand der Technik erweiterte Möglichkeiten bietet bei gleichzeitiger guter Heizfunktion.

Gelöst wird diese Aufgabe durch eine Heizkörperanordnung mit den Merkmalen des Anspruchs 1. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht. Des weiteren wird der Worlaut der deutschen Prioritätsanmeldung DE 202008010425.4 vom 30. Juli 2008 derselben Anmelderin durch ausdrückliche Bezugnahme zum Inhalt der vorliegenden Beschreibung gemacht.

Erfindungsgemäß ist vorgesehen, dass die Heizkörperanordnung mindestens zwei miteinander verbundene flächige Heizkörperelemente aufweist. Die Heizkörperelemente stehen aufrecht und sind flach bzw. sind hoch im Vergleich zu ihrer Breite und dünn im Vergleich zu ihrer Breite. Die Heizkörperelemente stehen in einem Winkel zueinander, der in einem Bereich zwischen 20° und 160° liegt. Durch diese winklige Anordnung stehen sie stabil. In ihrem unteren Bereich sind die Heizkörperelemente an einem Fußboden oder Untergrund unter dem Fußboden gesichert bzw. befestigt. Eine solche Heizkörperanordnung kann in einer Variante nach Art eines sogenannten Paravents ausgebildet sein und mit deutlicher Entfernung von einer Raumwand oder sogar mitten in einem Raum aufgestellt sein. Ähnlich wie bei einem solchen genannten Paravent kann die Heizkörperanordnung dann auch die Funktion eines Raumteilers haben oder einer Zwischenwand, beispielsweise als Sichtschutz odgl.. Des Weiteren ist durch die Aufstellung mitten im Raum die Heizwirkung erheblich verbessert, weil ein Heizkörperelement von beiden flächigen Seiten Wärme abstrahlen sowie sehr gut durch Konvektion an die Raumluft abgeben kann. Durch die jeweils winklig zueinander aufgestellten Heizkörperelemente wird eine ausreichende Stabilität der Anordnung erreicht, die ein Umkippen verhindert. Dazu dient eben auch die Befestigung der Heizkörperelemente am Fußboden bzw. an einem Untergrund, also an einem Rohfußboden unter einem Fußbodenbelag.

In Ausgestaltung der Erfindung kann vorgesehen sein, dass die Heizele mente ähnliche Abmessungen haben. Vorteilhaft haben sie gleiche Abmessungen und besonders vorteilhaft sind sie sogar identisch ausgebildet. Dadurch lässt sich der Herstellungsaufwand verringern, so dass aus mehreren identischen Heizkörperelementen, beispielsweise zwei oder drei, eine solche Heizkörperanordnung aufgebaut werden kann.

Ein Heizkörperelement kann beispielsweise zwischen 100 cm und 250 cm hoch sein sowie zwischen 30 cm und 100 cm breit sein. Besonders vorteilhaft sind Höhen um die 150 cm, die dann die Funktion als Raumteiler erfüllen, wobei man jedoch gleichzeitig noch über sie hinweg sehen kann. Eine entsprechende Breite kann dann zwischen 50 cm und 70 cm betragen. Grundsätzlich ist es dabei auch möglich, sämtliche Heizkörperelemente einer Heizkörperanordnung zwar gleich breit auszugestalten, jedoch unterschiedlich hoch.

Die Verbindung der Heizkörperelemente miteinander dient der Stabilität der gesamten Heizkörperanordnung gegen Umfallen. Deswegen kann eine einfach mechanische Verbindung wie beispielsweise eine Schraubverbindung, eine Klammer odgl. ausreichen. Alternativ können Heizkörperelemente über ein Schwenkgelenk miteinander verbunden sein, das es beim Aufbau problemlos ermöglicht, die Heizkörperelemente im gewünschten Winkel gegeneinander zu verschwenken, wobei sie dabei bereits fest miteinander verbunden sind und so ein Umkippen verhindert wird. Vorteihaft sind die Heizkörperelemente mit geringem Abstand zueinander vorgesehen. Besonders vorteilhaft schließen sie im Wesentlichen direkt aneinander an bzw. weisen nur eine minimale Lücke zwischen sich auf,so dass die vorgenannte Funktion eines Raumteilers bzw. Sichtschutzes gut erfüllt wird.

In Weiterbildung der Erfindung sind Füße vorgesehen, um die Heizkörperelemente zu sichern bzw. zu befestigen. Diese Füße sind einerseits am Fußboden oder Untergrund unter dem Fußboden befestigt, wobei eine Befestigung am Untergrund im Rohbauzustand des Bodenaufbaus bevorzugt wird und der Fußboden dann um die Füße herum aufgebaut wird. Die Füße werden dann am unteren Bereich der Heizkörperelemente nach Fertigstellen des Fußbodens auf entsprechende Art und Weise befestigt. Beispielsweise können die Füße nach oben stehende Profile oder Stangen aufweisen, die in entsprechende Hülsen an den Heizkörperelementen eingesteckt werden oder an tragenden Teilen der Heizkörperelemente befestigt werden. Bei einer Befestigung der Füße am Untergrund unter dem Fußboden können sie dann in Estrich odgl. eingegossen werden und über diesen überstehen. In vorteilhafter Ausgestaltung der Erfindung können die Füße dabei höhenverstellbarsein, entweder in sich oder bezüglich einer Befestigung am Heizkörperelement. So kann eine Anpassung an eine unterschiedliche Höhe des Fußbodenaufbaus erreicht werden, so dass das Heizkörperelement nachher bei der Befestigung stets in derselben Höhe über dem fertigen Fußboden verläuft.

Zur Erleichterung der sicheren und passgenauen Anbringung der Füße am Untergrund sowie für die Heizkörperelemente kann vorgesehen sein, dass ein Verbindungsblech am Untergrund entlang die Füße miteinander verbindet. Dieses Verbindungsblech, das auch unter Umständen aus einem sehr starken Flachmaterial bestehen kann, kann sowohl mit einem Untergrund des Raumes verbunden werden als auch mit den Füßen selber. Somit kann es auch zur Befestigung der Füße am Untergrund dienen. Des Weiteren ist es möglich, dass für zwei oder drei Heizkörperelemente die entsprechenden zwei oder drei Verbindungsbleche der Füße ebenfalls schwenkbar miteinander verbunden sind, wodurch sichergestellt werden kann, dass die Position der verschiedenen Füße nachher genau zur Position der verschiedenen Heizkörperelemente zueinander passt.

In Weiterbildung der Erfindung kann vorgesehen sein, dass die Heizkörperanordnung nicht nur ausschließlich aus Heizkörperelementen besteht. Es kann an einer Außenkante bzw. Außenseite eines Heizkörperelements ein schwenkbarer Seitenflügel vorgesehen sein, der nach Art eines flächigen Elementes ausgebildet ist. Er kann dieselbe Höhe haben wie das Heizkörperelement oder niedriger sein. Vorteilhaft ist ein solcher Seitenflügel eben bzw. flach und dünn. Die Oberfläche dieses Seitenflügels kann zu dekorativen oder praktischen Zwecken ausgebildet sein, beispielsweise kann es ein Spiegel sein, eventuell ein beidseitiger Spiegel, der entsprechend verschwenkt und möglicherweise auch direkt an das Heizkörperelement angeklappt werden kann, damit er nicht stört. Gerade in einem Badezimmer ist ein solcher nach Wunsch hervorklappbarer Spiegel von großem Vorteil.

Des Weiteren ist es möglich, dass ein solcher Seitenflügel entweder insgesamt einfach ausgetauscht werden kann oder aber eine Art Rahmen bildet, an dem wiederum austauschbare Oberflächenelemente angebracht werden können. So kann auf einfache Art und Weise das Aussehen und auch die Funktion des Seitenflügels variiert werden. Günstigerweise ist ein solcher Seitenflügel natürlich nur an freien Außenkanten des Heizkörperelements vorgesehen. Eine Verschwenkbarkeit kann in einem möglichst weiten Bereich vorgesehen sein, je nach Schwenkgelenk. Für die vorgenannte vorteilhafte Funktion des vollständigen Anklappens des Seitenflügels an die Seitenfläche eines Heizkörperelements ist ein einfaches Schwenkgelenk an einer Seite der Außenkante des Heizkörperelements befestigt, so dass sich dann aus geometrischen Gründen ein Schwenkwinkel zwischen etwa 0° und etwas unterhalb 270° ergibt. Dies wird aber üblicherweise als ausreichend angesehen.

Für einen Heißwasseranschluss der Heizkörperanordnung ist in Ausgestaltung der Erfindung vorgesehen, dass ein Vorlauf und ein Rücklauf für jeweils ein Heizkörperelement im Fußboden verlaufen. Von dort aus werden sie von unten her an das Heizkörperelement herangeführt, und zwar jeweils an den gegenüberliegenden unteren Enden. Wenn jedes der Heizkörperelemente einen eigenen Vorlauf und Rücklauf aufweist, kann in Ausgestaltung der Erfindung auf eine Wasserführung zwischen einzelnen Heizkörperelementen verzichtet werden. Dadurch wird zwar der gesamte Anschlussaufwand für die Heizkörperelemente größer. Gleichzeitig kann jedoch auf ein wasserleitendes Zwischenstück zwischen den Heizkörperelementen verzichtet werden, welches technisch komplizierter auszuführen wäre, da es die Schwenkbewegung der Heizkörperelemente zumindest beim Aufstellen mitmachen müsste.

In Weiterbildung der Erfindung kann vorgesehen sein, dass aufgrund der Befestigung über Füße am Fußboden bzw. Untergrund und die winklig miteinander verbundene Aufstellung der Heizkörperelemente auf weitere Befestigungen verzichtet wird. Insbesondere wird eine Befestigung der Heizkörperanordnung weder nach oben zu einer Raumdecke hin noch zur Seite zu einer Raumwand hin unbedingt benötigt. Dadurch wird der Aufbau insgesamt vereinfacht und es werden keine möglicherweise als unpraktisch empfundenen Befestigungen benötigt.

In weiterer Ausbildung der Erfindung kann vorgesehen sein, dass an einer Oberfläche eines Heizkörperelements Haltevorrichtungen vorgesehen sind. Solche Haltevorrichtungen können beispielsweise dazu dienen, Handtücher, kleinere Ablagen odgl. daran zu befestigen. Die Haltevorrichtungen können beispielsweise als an dem Heizkörperelement festgeschweißte Verschraubungspunkte ausgebildet sein.

Der konstruktive Aufbau eines Heizkörperelements kann einen seitlichen Rahmen aufweisen. Dieser weist zwischen sich einen von dem Heizwasser durchflossenen Zwischenbereich auf bzw. der Rahmen wird durch den Zwischenbereich miteinander verbunden. Dieser Zwischenbereich kann wie bei einem üblichen Heizkörper ausgebildet sein und beispielsweise gewellte Lamellen für eine vergrößerte Oberfläche zur Wärmeabgabe aufweisen. An dem Rahmen können zwei parallel zueinander verlaufende Flächenelemente vorgesehen sein, die als Vorderseite und Rückseite dienen. Diese Flächenelemente dienen als Dekoroberflächen. Sie können beliebig bemustert und/oder eingefärbt sein. Sie können austauschbar bzw. abnehmbar befestigt sein, sowohl zur Montage als auch für einen möglichen späteren Austausch. Bei einem solchen konstruktiven Aufbau können die vorgenannten Füße zur Befestigung nach unten an dem seitlichen Rahmen angebracht sein. Dieser Rahmen verleiht dem Heizkörperelement dann seine Stabilität.

Zusätzlich zu den Füßen kann an dem vorgenannten Verbindungsblech auch ein Leitungsstück zum Anschluss an den Vorlauf und den Rücklauf eines Heizkörperelements vorgesehen sein. Dadurch wird mittels des Verbindungsblechs auch die korrekte Position dieser Leitungen festgelegt, so dass auch hier Montagefehler vermieden werden können.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in Zwischen-Überschriften und einzelne Abschnitte beschränkt die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine Schrägdarstellung einer erfindungsgemäßen Heizkörperanordnung mit winklig zueinander aufgestellten Heizkörperelementen,
- Fig. 2: eine Detaildarstellung eines Heizkörperelements im unteren Bereich samt Befestigung,
- Fig. 3: einen Schnitt durch ein Heizkörperelement im unteren Bereich ähnlich Fig. 2 und
- Fig. 4: eine Draufsicht auf die Anordnung aus Fig. 1 mit Darstellung der Winkel der Heizkörperelemente zueinander.

### Detaillierte Beschreibung der Ausführungsbeispiele

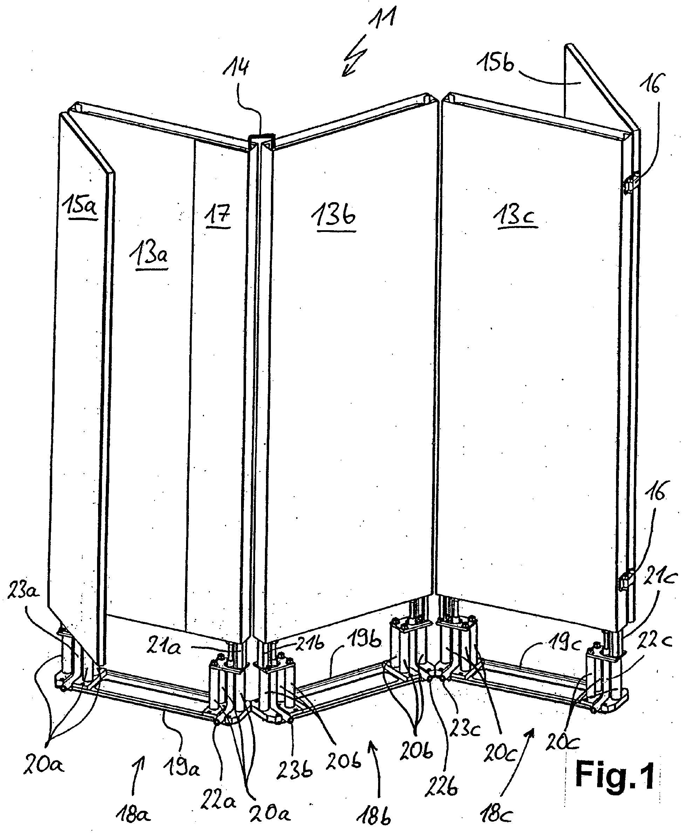

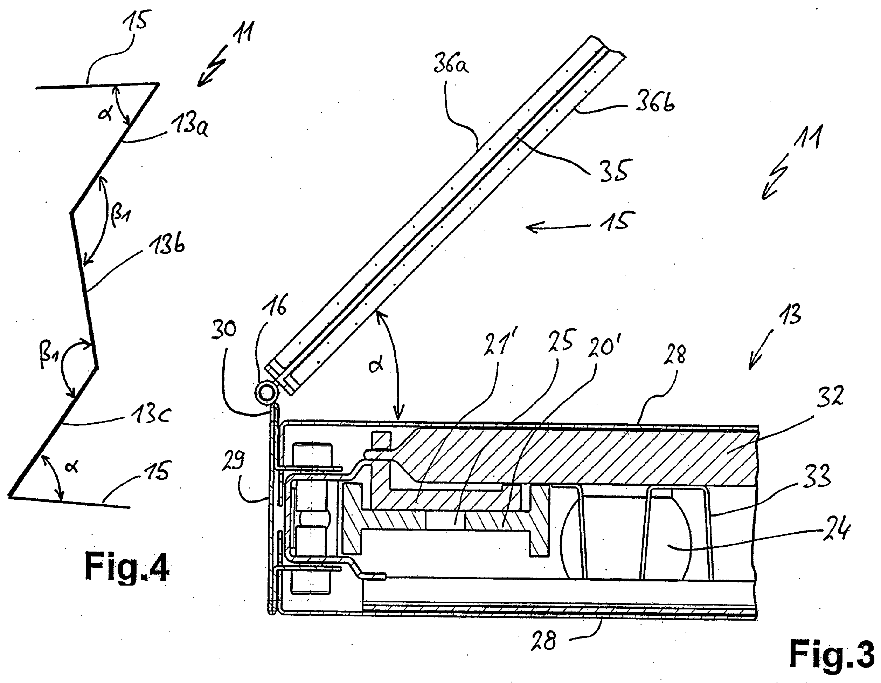

In Fig. 1 ist eine erfindungsgemäße Heizkörperanordnung 11 dargestellt, wie sie beispielsweise in einem Badezimmer installiert sein kann und als Raumteiler odgl. dienen kann. Drei Heizkörperelemente 13a, 13b und 13c bilden die Hauptbestandteile der Heizkörperanordnung 11 und sind winklig zueinander angeordnet, wie auch aus der Draufsicht in Fig. 4 zu erkennen ist. Der Winkel zwischen den Heizkörperelementen 13a und 13b beträgt etwa 135°, wie auch zwischen den Heizkörperelementen 13b und 13c. Ihre Seitenkanten stoßen beinahe aneinander, sodass nur ein minimaler Zwischenspalt gegeben ist. Unter Umständen können sie auch vollständig aneinander anstoßen, möglicherweise auch mit einem Zwischenraumfüller oder einem elastischen Streifen verbunden sein, so dass gar keine Lücke sichtbar ist. Im oberen Bereich ist zwischen den Heizkörperelementen 13a und 13b ein klammerartiges Verbindungsteil 14 dargestellt. Dieses kann beispielsweise von oben in die nach oben offenen Heizkörperelemente eingesetzt werden und dient dazu, die beiden fest miteinander zu verbinden, damit sie sich gegenseitig stützen, insbesondere in Verbindung mit der winkligen Anordnung zueinander. Anstelle eines einfach ausgebildeten klammerartigen Verbindungsteils 14 könnte auch ein Gelenk-Verbindungsteil vorgesehen sein, das eine Schwenkbewegung ermöglicht bzw. an beliebige Winkel zueinander und somit auch beliebige Abstände der Seitenkanten zueinander angepasst sein kann. Ebenso möglich sind hier in ihrer Weite einstellbare Halte klammern.

Links an dem Heizkörperelement 13a ist ein Seitenflügel 15a über ein nicht zu erkennendes Schwenkgelenk verbunden. Ebenso trägt das rechte Heizkörperelement 13c einen rechten Seitenflügel 15b über die beiden Schwenkgelenke 16. Während die Anordnung der Heizkörperele mente 13 zueinander fest vorgegeben ist im fertigen Zustand und nicht mehr verändert werden kann, sind die Schwenkgelenke 16 frei bewegbar. So können die Seitenflügel 15 beliebig verschwenkt werden, je nach Ausbildung des Schwenkgelenks auch voll an eine Seite eines Heizkörperelementes herangeklappt werden. Dies wird später noch genauer erläutert. Des Weiteren trägt das linke Heizkörperelement 13a in seinem rechten Bereich einen Teilspiegel 17, der etwa ein Drittel der Breite und die gesamte Höhe des Heizkörperelements 13a bzw. seiner sichtbaren Höhe einnimmt. Dieser Teilspiegel 17 kann fest an der Oberfläche angebracht sein, beispielsweise festgeklebt sein.

Zur Befestigung bzw. Anordnung der Heizkörperanordnung 11 ist im unteren Bereich eine Fußkonstruktion 18a bis 18c vorgesehen, also für jedes Heizkörperelement 13 eine separate Fußkonstruktion. Diese Fußkonstruktion 18 weist ein Verbindungsblech 19a bis 19c auf, welches sich über die gleiche Breite wie das Heizkörperelement erstreckt und aus starkem Blech bzw. Metall besteht. Auf dem Verbindungsblech 19 sind mehrere Füße 20a bis 20c vorgesehen, entweder angeschraubt oder angeschweißt. Diese Füße 20a bis 20c wiederum sind, zumindest im Außenbereich, nach oben mit jeweils einer Haltestange 21a bis 21c verbunden. Diese Haltestangen 21a bis 21c gehören zu den Heizkörperelementen 13a bis 13c und sind dort fester Bestandteil. Sie können höhenverstellbar mit den Füßen 20a bis 20c verbunden werden. Dies wird nachfolgend noch näher erläutert.

Des Weiteren ist in Fig. 1 unten dargestellt, wie jeweils ein Vorlauf 22a bis 22c und ein Rücklauf 23a bis 23c für jedes Heizkörperelement 13a bis 13c vorgesehen sind. Dies bedeutet, dass zum einen jedes Heizkörperelement 13a bis 13c separat geregelt werden kann. Des Weiteren werden keine wasserführenden Verbindungen einzelner Heizkörperelemente zueinander benötigt, die bezüglich der Schwenkbarkeit bzw. unterschiedlichen winkligen Anordnung zueinander technisch nur mit großem Aufwand zu realisieren wären angesichts der geforderten Dichtheit.

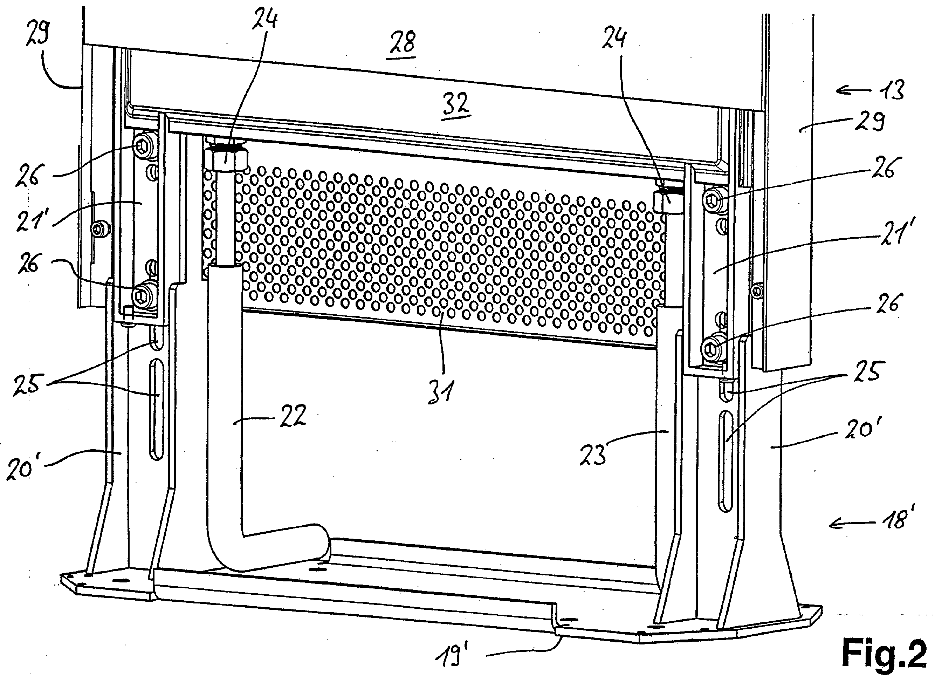

In Fig. 2 ist eine alternative Fußkonstruktion 18' in Vergrößerung dargestellt. Auch hier ist ein Verbindungsblech 19' vorgesehen, welches direkt auf einem Rohfußboden oder Untergrund, beispielsweise einer betonierten Bodenplatte, verbunden bzw. darauf befestigt wird. Hierzu können Befestigungsschrauben odgl. dienen. An beiden Enden weist das Verbindungsblech 19' nach oben abstehende Füße 20' auf, die beispielsweise daran festgeschweißt sein können. Die Füße 20' können in etwa eine Art Doppel-T-Profil aufweisen mit mehreren Langlöchern 25.

An einer Seite liegen an den Füßen 20' Haltestangen 21' des Heizkörperelements 13 an bzw. verlaufen schienenartig in dem Profil des Fußes 20'. Über mehrere Befestigungsschrauben 26 werden die Haltestangen 21' an den Füßen 20' befestigt. Dabei ist zu erkennen, dass diese Befestigung sozusagen höhenverstellbar ist. Die Haltestangen 21' bilden einen Teil des seitlichen Rahmens für ein Heizkörperelement 13, oder im Wesentlichen den gesamten Rahmen, und so kann eine Art Höhenverstellung des Heizkörperelements 13 gegenüber dem Verbindungselement 19' und somit einem Rohfußboden erfolgen. Dies bedeutet, dass beim Aufbau der Heizkörperanordnung 11 das Verbindungselement 20' an genau vorherbestimmter Stelle am Rohfußboden befestigt wird. Ebenso werden Vorlauf 22 und Rücklauf 23 verlegt, wobei diese möglicherweise mit dem Verbindungsblech oder den Füßen so verbunden sein können, dass eine genaue konstruktive Ausrichtung vorgegeben ist. So werden Heizwasserrohre mit kurzen Rohrstücken verbunden, die integraler Bestandteil der Fußkonstruktion 18' sind. Dann wird der Fußbodenaufbau fertig gestellt, beispielsweise durch Gießen von Estrich, Verlegen einer Fußbodenheizung und einem abschließenden oberen Fußbodenbelag wie Fliesen odgl.. Bei der Anbringung der Heizkörperelemente 13 ragen die oberen Bereiche der Füße 20' aus dem Fußboden heraus, und an diesen herausstehenden Bereichen wird jeweils ein Heizkörperelement 13 mit den beiden Haltestangen 21' und den Befestigungsschrauben 26 befestigt. Dabei können die Haltestangen 21' mit ihrem unteren Ende oben auf dem Fußbodenbelag aufstehen oder einen geringen Abstand dazu aufweisen, was eben durch die Höhenverstellbarkeit gut eingestellt werden kann. Des Weiteren erfolgt dabei auch der Anschluss von Vorlauf 22 und Rücklauf 23 an die Wasseranschlüsse 24 des Heizkörperelements 13. Auch diese können entsprechend höhenverstellbar ausgebildet sein.

Ein Heizkörperelement 13 weist auch noch, wie dargestellt, Oberflächen 28 auf. Diese können beispielsweise lackierte Blechteile und ebenausgebildet sein. Sie können jedoch auch farbig, unterschiedlich farbig, verspiegelt oder mit sonstiger Oberfläche vorgesehen sein, ebenso können sie auch mit unterschiedlichen Oberflächenstrukturen bzw. -formen versehen sein. Links und rechts sind schmale Seitenteile 29 vorgesehen. Diese verschließen das Heizkörperelement 13 seitlich und werden ebenfalls an den Haltestangen 21' festgeschraubt, möglicherweise zusammen mit den Oberflächen 28.

Um einen in den Zeichnungen zwar nicht dargestellten, jedoch leicht vorstellbaren sauberen bzw. bündigen Abschluss eines Heizkörperelements 13 zu einer fertig gestellten Fußbodenoberfläche zu erhalten, kann vorgesehen sein, die Distanz zwischen Unterkante der Oberfläche 28 und Fußbodenoberfläche mit einem in Rg. 2 beispielhaft an der Rückseite des Heizkörperelements 13 dargestellten Lochblech 31 oder einer anderen Blende zu verschließen. Ein Lochblech 31 weist den Vorteil auf, dass Luft angesaugt werden kann, welche von dem Heizkörperelement 13 in seinem Inneren erwärmt und nach oben ausgelassen wird. Alternativ könnten auch Schlitze oder sonstiges vorgesehen sein. Damit ein flächiger Abschluss nach unten nicht aufwändig von seinen Abmessungen her an die zu verschließende Fläche angepasst werden muss, ist es möglich, dass dieser flächige Abschluss beispielsweise unter die Oberfläche 28 reicht und so gegenüber dieser veschiebbar ist als Höhenverstellung.

Für die Seitenteile 29 können nach unten entweder ähnliche Zwischenteile wie das Lochblech 31 vorgesehen sein. Alternativ können diese auf Maß abgesägt werden, was bei den schmalen Seitenteilen leicht möglich sein sollte. Bei einem nochmals alternativen Vorgehen bei der Montage der Heizkörperanordnung 11 kann vorgesehen sein, dass bei ausreichend großer Höhe der Füße 20 auch über der Fußbodenoberfläche die einzehen Heizkörperelemente 13 jeweils so daran befestigt werden, dass ihre Höhe bzw. die Höhe beispielsweise der Unterkante der Oberflächen 28 über der Fußbodenoberfläche immer gleich ist. Dann können exakt vorgefertigte Lochbleche 31 bzw. Blendenteile verwendet werden.

Des Weiteren ist in Fig. 2 auch zu erkennen, wie ein Zwischenbereich 32, der über die Wasseranschlüsse 24 mit Vorlauf 22 und Rücklauf 23 verbunden ist, als wasserführender Bereich des Heizkörperelements 13 an den Haltestangen 21' befestigt bzw. eingehängt ist. Schließlich bildet der Zwischenbereich 32 das Hauptgewicht des Heizkörperelements 13. Aus Fig. 3 ist in der Schnittdarstellung ebenfalls detailliert zu erkennen, wie ein Heizkörperelement 13 aufgebaut ist. Hier ist auch zu erkennen, wie an der Rückseite des wasserführenden Zwischenbereichs 33 auf übliche Art und Weise Lamellen 33 aus dünnem Blech angebracht sind, die den größten Teil des Innenraums des Heizkörperebments 13 durchqueren und für die bessere Erwärmung der durchströmenden Luft sorgen. Hier ist auch zu erkennen, wie die Oberflächen 28 an den Seiten umgewinkelt sind und zusammen mit den Seitenteilen 29 an den Haltestangen 21' festgeschraubt sind.

Aus Fig. 3 ist des Weiteren zu erkennen, wie die Schwenkgelenke 16 an dem Seitenteil 29 befestigt sind, und zwar am Bereich einer etwas abstehenden Seitenkante 30. Da steht auch die Gelenkachse etwas über die Ebene der Oberfläche 28 über, so dass sich der Schwenkbereich des Winkels α von 0° bis etwa 230° erstreckt. Dies bedeutet also, dass das Seitenteil 15 vollflächig auf die Oberfläche 28 angeschwenkt werden kann. Des Weiteren kann es in der anderen Richtung über die Ebene der Oberfläche 28 hinüber geschwenkt werden. Sind die Schwenkgelenke 16 etwas aufwändiger ausgebildet, so ist es auch möglich, dass ein Seitenflügel an beide Oberflächen 28 eines Heizkörperelements 13 angelegt werden kann.

Wenn das Seitenteil 15, wie dargestellt, an einem die Stabilität bewirkenden Mittelteil 35 zwei Oberflächenelemente 36a und 36b in Form von Spiegeln odgl. trägt, entsteht so ein in einem großen Bereich schwenkbarer, doppelseitiger Spiegel. Dies ist vor allem in einem Badezimmer von großem Vorteil. Ein weiterer Spiegel an der Heizkörperanordnung 11 ist ja durch den Teilspiegel 17 am linken Heizkörperelement 13a gegeben.

In Fig. 4 ist nocheinmal dargestellt, wie die Heizkörperanordnung 11 aus Fig. 1 schematisch in Draufsicht winklig zueinander ausgebildet ist. Die Winkel α können also bei einer Gelenksanordnung gemäß Fig. 3 zwischen 0° und etwa 225° liegen, und zwar je nach Anordnung des Schwenkgelenks 16 auf einer der Seitenkanten 30 des Seitenteils 29, was auch nachträglich konstruktiv noch verändert werden kann. Die Bereiche der Winkel β₁ und β₂ können dagegen wie vorgenannt zwischen 20° und 160° liegen, vorteilhaft zwischen 45° und 135°. Dies hängt aber letztendlich, wie aus Fig. 4 offenkundig zu erkennen ist, nicht jeweils von dem Winkel zwischen zwei Heizkörperelementen 13 ab, sondern von den Winkeln aller Heizkörperelementen einer Heizkörperanordnung 11. So ist es im Prinzip nämlich auch denkbar, dass zwei Heizkörperelemente 13 zueinander nahezu in einer Linie liegen, wenn ein drittes Heizkörperelement an einer der Seiten dann in einem Winkel von etwa 90° vorgesehen ist, beispielsweise mit einem Winkel zwischen 60° und 120°. Dann kann eine ausreichende Abstützung gegen Umkippen auch durch dieses winklig argeordnete Heizkörperelement erfolgen.

Die Seitenflügel 15 können in ihrem unteren Bereich entweder frei über einem Fußboden schweben. Alternativ können sie aufgestützt verlaufen, beispielsweise über eine Art Gleiter oder Rollen. Dadurch sowie durch eine möglicherweise etwas größere Reibung in den Schwenkgelenken 16 bleibt ihre einmal eingestellte winklige Ausrichtung erhalten. Gleichzeitig kann gerade bei relativ schweren Seitenflügeln 15 durch ein Abstützen auf dem Boden eine zu große seitliche Kippkraft auf das tragende Heizkörperelement 13 vermieden werden.

## Patentansprüche

1. Heizkörperanordnung (11), die mindestens zwei miteinander verbundene flächige Heizkörperelemente (13a-c) aufweist, wobei die Heizkörperelemente aufrecht stehen, hoch sind im Vergleich zu ihrer Breite und dünn sind im Vergleich zu ihrer Breite und in einem Winkel zwischen 20° und 160° zueinander stehen, wobei die Heizkörperelemente (13a-c) im unteren Bereich an einem Fußboden oder Untergrund gesichert bzw. befestigt sind, **dadurch gekennzeichnet, dass** ein Vorlauf (22a-c) und ein Rücklauf (23a-c) für jeweils ein Heizkörperelement (13a-c) im Fußboden verlaufen und von unten her an das Heizkörperelement herangeführt sind.

2. Heizkörperanordnung nach Anspruch 1, **dadurch gekennzeichnet, dass** die Heizkörperelemente (13a-c) ähnliche Abmessungen haben, insbesondere gleiche Abmessungen, wobei sie vorzugsweise identisch ausgebildet sind.

3. Heizkörperanordnung nach Anspruch 1 oder 2, **dadurch gekennzeichnet, dass** ein Heizkörperelement (13a-c) zwischen 100 cm und 250 cm hoch ist und 30 cm bis 100 cm breit ist.

4. Heizkörperanordnung nach einem der vorhergehenden Ansprüche, **dadurch gekennzeichnet, dass** die Heizkörperelemente (13a-c) über ein Schwenkgelenk (14, 16) miteinander verbunden sind, insbesondere mit geringem Abstand zueinander, wobei sie vorzugsweise im Wesentlichen direkt aneinander anschließen.

5. Heizkörperanordnung nach einem der vorhergehenden Ansprüche, **dadurch gekennzeichnet, dass** sie Füße (20a-c, 20') zur Sicherung bzw. Befestigung der Heizkörperelemente (13a-c) aufweist am unteren Bereich der Heizkörperelemente, wobei die Füße am Fußboden oder Untergrund, insbesondere am Untergrund im Rohbauzustand, befestigt sind, wobei vorzugsweise die Füße (20a-c) zum Eingießen in Estrich odgl. bei einem Aufbau des Fußbodens ausgebildet sind.

6. Heizkörperanordnung nach Anspruch 5, **dadurch gekennzeichnet, dass** die Füße (20a-c, 20') höhenverstellbar sind zur Anpassung der Heizkörperelemente (13a-c) an eine Höhe des Fußbodens bzw. Estrichs.

7. Heizkörperanordnung nach Anspruch 5 oder 6, **dadurch gekennzeichnet, dass** die Füße (20a-c, 20') über ein Verbindungsblech (19a-c) am Untergrund entlang miteinander verbunden sind, wobei insbesondere das Verbindungsblech (19a-c) sowohl mit einem Untergrund des Raumes verbunden ist als auch die Füße (20a-c, 20') an dem Verbindungsblech befestigt sind.

8. Heizkörperanordnung nach einem der vorhergehenden Ansprüche, **dadurch gekennzeichnet, dass** an einer Außenkante bzw. an einer Außenseite eines Heizkörperelements (13a, 13c) ein schwenkbarer Seitenflügel (15a, 15b) nach Art eines flächigen Elements vorgesehen sind, wobei vorzugsweise ein Seitenflügel (15a, 15b) eben und dünn ist, wobei er insbesondere nur geringfügig kleiner ist als ein Heizkörperelement (13a-c) und insbesondere eine farbige oder verspiegelte Oberfläche aufweist.

9. Heizkörperanordnung nach Anspruch 8, **dadurch gekennzeichnet, dass** der Seitenflügel (15a, 15b) ein austauschbares Oberflächenelement (36a, 36b) aufweist, das im Wesentlichen vollflächig an einer der beiden Seiten befestigbar ist.

10. Heizkörperanordnung nach Anspruch 8 oder 9, **dadurch gekennzeichnet, dass** der Seitenflügel (15a, 15b) eine Verschwenkbarkeit gegenüber dem ihn tragenden Heizkörperelement (13a, 13c) aufweist in einem Bereich weniger als 360°, vorzugsweise zwischen 0°und 180°.

11. Heizkörperanordnung nach einem der vorhergehenden Ansprüche, **dadurch gekennzeichnet, dass** zwei benachbarte Heizkörperelemente (13a-c) ohne Wasserführung zwischen ihnen ausgebildet sind.

12. Heizkörperanordnung nach einem der vorhergehenden Ansprüche; **dadurch gekennzeichnet, dass** die Heizkörperelemente (13a-c) nur in ihrem unteren Bereich bzw. an ihrer Unterseite am Fußboden oder Untergrund befestigt sind, insbesondere ohne Befestigung nach oben oder zur Seite hin an einer Raumdecke oder Raumwand.

13. Heizkörperanordnung nach einem der vorhergehenden Ansprüche, **dadurch gekennzeichnet, dass** Haltevorrichtungen an einer Oberfläche des Heizkörperelements (13a-c) vorgesehen sind, vorzugsweise festgeschweißte Verschraubungspunkte.

14. Heizkörperanordnung nach einem der vorhergehenden Ansprüche, **dadurch gekennzeichnet, dass** ein Heizkörperelement (13a-c) einen seitlichen Rahmen aufweist, der mit einem von Heizwasser durchflossenen Zwischenbereich verbunden ist und an dem zwei parallel zueinander verlaufenden Flächenelemente (28) als Vorder- und Rückseite austauschbar bzw. abnehmbar befestigt sind.

## Claims

1. Radiator arrangement (11), which has at least two surface-area radiator elements (13a-c) connected to one another, the radiator elements being upright, high in comparison with their width and thin in comparison with their width and standing at an angle of between 20° and 160° to one another, the radiator elements (13a-c) being secured or fastened in the lower region to a floor or base, **characterized in that** a flow (22a-c) and a return (23a-c) for in each case one radiator element (13a-c) run in the floor and lead up to the radiator element from below.

2. Radiator arrangement according to Claim 1, **characterized in that** the radiator elements (13a-c) have similar dimensions, in particular the same dimensions, wherein they are preferably identically formed.

3. Radiator arrangement according to Claim 1 or 2, **characterized in that** a radiator element (13a-c) is between 100 cm and 250 cm high and 30 cm to 100 cm wide.

4. Radiator arrangement according to one of the preceding claims, **characterized in that** the radiator elements (13a-c) are connected to one another by means of a pivot joint (14, 16), in particular at a small distance from one another, wherein they preferably adjoin one another essentially directly.

5. Radiator arrangement according to one of the preceding claims, **characterized in that** it has feet (20a-c, 20') for securing or fastening the radiator elements (13a-c) at the lower region of the radiator elements, wherein the feet are fastened to the floor or base, in particular to the base in the bare state, wherein preferably the feet (20a-c) are designed for casting in screed or the like when building up the floor.

6. Radiator arrangement according to Claim 5, **characterized in that** the feet (20a-c, 20') are adjustable in height to adapt the radiator elements (13a-c) to a height of the floor or screed.

7. Radiator arrangement according to Claim 5 or 6, **characterized in that** the feet (20a-c, 20') are connected to one another along the base by means of a connecting plate (19a-c), wherein in particular the connecting plate (19a-c) is connected to a base of the room and the feet (20a-c, 20') are fastened to the connecting plate.

8. Radiator arrangement according to one of the preceding claims, **characterized in that** a pivotable side wing (15a, 15b) akin to a surface-area element is provided on an outer edge or an outer side of a radiator element (13a, 13c), wherein preferably a side wing (15a, 15b) is planar and thin, wherein it is in particular only slightly smaller than a radiator element (13a-c) and, in particular, has a coloured or mirrored surface.

9. Radiator arrangement according to Claim 8, **characterized in that** the side wing (15a, 15b) has an exchangeable surface element (36a, 36b) which can be fastened to one of the two sides, essentially over the full surface area.

10. Radiator arrangement according to Claim 8 or 9, **characterized in that** the side wing (15a, 15b) is pivotable with respect to the radiator element (13a, 13c) carrying it in a range of less than 360°, preferably between 0° and 180°.

11. Radiator arrangement according to one of the preceding claims, **characterized in that** two neighbouring radiator elements (13a-c) are formed without any flow of water between them.

12. Radiator arrangement according to one of the preceding claims, **characterized in that** the radiator elements (13a-c) are fastened to the floor or base only in their lower region or on their underside, in particular without fastening at the top or to the side, to a ceiling or wall of the room.

13. Radiator arrangement according to one of the preceding claims, **characterized in that** holding devices, preferably fixedly welded screwing points, are provided on a surface of the radiator element (13a-c).

14. Radiator arrangement according to one of the preceding claims, **characterized in that** a radiator element (13a-c) has a lateral frame, which is connected to an intermediate region flowed through by heating water and to which two surface-area elements (28) running parallel to one another are exchangeably or removably fastened as front and rear sides.

## Revendications

1. Agencement de radiateur (11), qui présente au moins deux éléments de radiateur plats (13a-c) reliés l'un à l'autre, dans lequel les éléments de radiateur sont dressés, sont hauts par rapport à leur largeur et sont minces par rapport à leur largeur et ils sont placés avec un angle compris entre 20° et 160° l'un par rapport à l'autre, dans lequel les éléments de radiateur (13a-c) sont attachés ou fixés dans leur région inférieure à un plancher ou à une base, **caractérisé en ce qu'**un conduit d'arrivée (22a-c) et un conduit de retour (23a-c) sont posés dans le plancher respectivement pour chaque élément de radiateur (13a-c) et sont amenés par le bas à l'élément de radiateur.

2. Agencement de radiateur selon la revendication 1, **caractérisé en ce que** les éléments de radiateur (13a-c) ont des dimensions similaires, en particulier des dimensions égales, dans lequel ils sont de préférence configurés de façon identique.

3. Agencement de radiateur selon la revendication 1 ou 2, **caractérisé en ce qu'**un élément de radiateur (13a-c) a une hauteur comprise entre 100 cm et 250 cm et une largeur comprise entre 30 cm et 100 cm.

4. Agencement de radiateur selon l'une quelconque des revendications précédentes, **caractérisé en ce que** les éléments de radiateur (13a-c) sont reliés l'un à l'autre par une articulation pivotante (14, 16), en particulier à une faible distance l'un de l'autre, dans lequel ils se raccordent de préférence essentiellement directement l'un à l'autre.

5. Agencement de radiateur selon l'une quelconque des revendications précédentes, **caractérisé en ce qu'**il présente des pieds (20a-c, 20') pour attacher ou fixer les éléments de radiateur (13a-c) dans la région inférieure des éléments de radiateur, dans lequel les pieds sont fixés au plancher ou à la base, en particulier à la base dans l'état de gros oeuvre, dans lequel de préférence les pieds (20a-c) sont configurés pour être noyés dans la chape ou pareil lors d'une construction du plancher.

6. Agencement de radiateur selon la revendication 5, **caractérisé en ce que** les pieds (20a-c, 20') sont réglables en hauteur pour l'adaptation des éléments de radiateur (13a-c) à une hauteur du plancher ou de la chape.

7. Agencement de radiateur selon la revendication 5 ou 6, **caractérisé en ce que** les pieds (20a-c, 20') sont reliés les uns aux autres par une tôle de liaison (19a-c) le long de la base, dans lequel en particulier la tôle de liaison (19a-c) est reliée aussi bien à une base du local et les pieds (20a-c, 20') sont fixés à la tôle de liaison.

8. Agencement de radiateur selon l'une quelconque des revendications précédentes, **caractérisé en ce qu'**il est prévu sur une arête extérieure ou sur un côté extérieur d'un élément de radiateur (13a, 13c) une aile latérale pivotante (15a, 15b) à la manière d'un élément plat, dans lequel une aile latérale (15a, 15b) est de préférence plane et mince, dans lequel elle n'est en particulier que légèrement plus petite qu'un élément de radiateur (13a-c) et présente en particulier une surface colorée ou métallisée.

9. Agencement de radiateur selon la revendication 8, **caractérisé en ce que** l'aile latérale (15a, 15b) présente un élément de surface remplaçable (36a, 36b), qui peut être fixé essentiellement sur toute la surface sur une des deux faces.

10. Agencement de radiateur selon la revendication 8 ou 9, **caractérisé en ce que** l'aile latérale (15a, 15b) présente, par rapport à l'élément de radiateur (13a, 13c) qui la porte, une capacité de pivotement dans une plage de moins de 360°, de préférence comprise entre 0° et 180°.

11. Agencement de radiateur selon l'une quelconque des revendications précédentes, **caractérisé en ce que** deux éléments de radiateur voisins (13a-c) sont réalisés sans conduite d'eau entre eux.

12. Agencement de radiateur selon l'une quelconque des revendications précédentes, **caractérisé en ce que** les éléments de radiateur (13a-c) ne sont fixés au plancher ou à la base que dans leur région inférieure ou à leur côté inférieur, en particulier sans fixation vers le haut ou vers le côté à un plafond du local ou à un mur du local.

13. Agencement de radiateur selon l'une quelconque des revendications précédentes, **caractérisé en ce qu'**il est prévu des dispositifs de maintien sur une surface de l'élément de radiateur (13a-c), de préférence des points de vissage soudés.

14. Agencement de radiateur selon l'une quelconque des revendications précédentes, **caractérisé en ce qu'**un élément de radiateur (13a-c) présente un cadre latéral, qui est relié à une région intermédiaire parcourue par de l'eau de chauffage et auquel deux éléments plats (28) s'étendant parallèlement l'un à l'autre sont fixés de façon remplaçable ou amovible en tant que face avant et face arrière.
